Europäisches Patentamt

European Patent Office

Office européen des brevets

(19)

(11) Publication number: **0 102 377**
**B1**

(12) # EUROPEAN PATENT SPECIFICATION

(45) Date of publication of patent specification: **06.12.89**

(21) Application number: **83900910.7**

(22) Date of filing: **08.03.83**

(86) International application number:
**PCT/DK83/00028**

(87) International publication number:
**WO 83/03134 15.09.83 Gazette 83/21**

(51) Int. Cl.⁴: **G 01 C 15/02,** G 01 C 1/00,
G 12 B 9/08

(54) **A TERRESTRIAL LOCALIZATION PLANT AND AUXILIARIES FOR USE THEREOF.**

(30) Priority: **08.03.82 DK 987/82**

(43) Date of publication of application:
**14.03.84 Bulletin 84/11**

(45) Publication of the grant of the patent:
**06.12.89 Bulletin 89/49**

(84) Designated Contracting States:
**AT BE CH DE FR GB LI NL SE**

(56) References cited:
**EP-A-0 090 021     US-A-2 527 681
DE-A-2 307 170     US-A-2 679 105
DE-B-1 249 416     US-A-4 192 076
FR-A-1 359 336     US-A-4 290 207
SE-B- 380 344      US-A-4 339 880
US-A-2 328 517     US-A-4 356 637**

The file contains technical information
submitted after the application was filed and
not included in this specification

(73) Proprietor: **PEDERSEN, Willy Palle
Filippavej 37
DK-8270 Höjbjerg (DK)**

(72) Inventor: **PEDERSEN, Willy Palle
Filippavej 37
DK-8270 Höjbjerg (DK)**

(74) Representative: **Smulders, Theodorus A.H.J., Ir.
et al
Vereenigde Octrooibureaux Nieuwe Parklaan
107
NL-2587 BP 's-Gravenhage (NL)**

Courier Press, Leamington Spa, England.

## Description

The present invention relates to terrestrial localization system and method.

Up through the history various facilities and systems have been developed for the determination of points on the surface of the earth and for enabling such points to be refound, should a possible visual marking of the point disappear. Markings of frontiers and real estates are elementary examples. In modern time the demands for position registrations with high accuracy have been steadily increasing, even for subterranean installations.

Based on surveying it has been possible to produce increasingly exact and detailed maps, including regional maps and very detailed local maps, and many localization tasks are easily solved by the use of such maps. Points, lines or objects of any type, also subterranean objects, may be plotted into the maps and thereafter be refound based on a measuring out from such points (fixpoints) which are known to be correctly shown on the map as well as correspondingly correctly located in the field in a marked and easily refindable manner.

The marked fixpoints should be located in protected local areas, which are not affected by the changes as otherwise going on in the topography, and in which the fixpoint markings do not interfere with the general use of the land. Normally, geodetic fixpoint markings in the field are constituted by heavy concrete blocks having an exposed top portion, in which the very fixpoint is marked. Such fixpoints are established throughout the country, though of course not very close to each other, as they are expensive to establish and difficult to find suitable mounting places for, not least in such areas, in which they are needed most. However, very exact measuring instruments and methods have been developed, whereby a reasonably accurate surveying work can be carried out in a rather large area, e.g. based on one fixpoint and a finding of the true north direction therefrom.

The said known fixpoints are often named "trigonometric stations", which refers to the traditional manner in which the measurements are made, viz. by angular determination of triangles, the corners of which are temporarily marked with a surveyor's pin, whereby a row of triangles can be defined towards the working point or area which is to be measured out from the fixpoint or to be measured into the geodetic system. Based on this triangulation it is possible to calculate the direction and the distance between the fixpoint and the working point or area, when the length of a basic triangle side is known. The measuring technique is based mainly on exact determination of angles, and the associated meters (theodolites) are expensive instruments, which are troublesome to use, not least because they require successive careful mounting in a considerable number of points when the triangulation path is long.

Attempts are being made to simplify the work by providing for exact long range distance measuring devices, whereby the triangulation work can be minimized. However, such devices as showing the required accuracy tend to be extremely expensive.

Another partial solution to the problem would be to establish the fixpoints closer to each other, but this has been unrealistic so far. However, the international patent application No. PCT/DK82/00090 (EP—A—90021; priority date 08.10.81) discloses the possibility of using a certain type of marker for a very easy, cheap and convenient fixpoint marking, viz. a simple and cheap electromagnetic marker which is suitable for subterranean mounting and is refindable by means of a search detector device, such that it can easily be localised when its position is roughly known. This means that the marker area can be refound, even though the marker is invisible and thus non-interfering with normal surface activities, by a quick and rough measurement from nearby topographic details or from the nearest ordinary fixpoint, whereafter the exact location of the marker is determined on the spot by means of the search device. Thus, when such additional fixpoints have once been established, e.g. distributed generally uniformly amongst the ordinary, heavy fixpoint installations, then an otherwise long triangulation path can be partly short circuited by a quick localisation of an additional fixpoint close to the relevant working point or area, whereafter the remaining work will be quite easy to carry out.

The said electromagnetic marker is a small rod shaped device which can be mounted at a safe depth in the ground almost anywhere. In fact such a marker type, including also permanent magnets, is already well known for subterranean marking, but for the purpose of constituting a direct marking of the location of some subterranean object or installation. The known markers have not been suitable or at least not recognized as being suitable or applicable for the marking of geodetic or similar fixpoints, which are traditionally associated with large and heavy markers defining the fixpoint materially and not as an immaterial point on the surface of the ground.

However, the immateriality of a fixpoint as defined by a subterranean marker, when definable with the required accuracy by means of the searching device, is in no way less qualified than a materially marked fixpoint. It should be ensured, of course, that the refining of the subterranean marker—or rather the point in which its axis intersects the ground surface—can be effected not only with the required ordinary accuracy, but also with the certainty that the detected marker really is the fixpoint marker and not some other nearby object such as an irrelevant, buried permanent magnet. The marker disclosed in the said international patent application does not give rise to such uncertainty, because it is of a type comprising a resonant circuit responding to a specific search frequency which will not incidentally produce a relevant response signal from any object other than the marker.

The present invention is based on the use of such or equal subterranean markers and has for its purpose to provide an improved marking and localization system, in which special advantage is taken of the possibilities offered by the subterranean markers rather than just copying the traditional geodetic system of "trigonometric stations" by using an increased number of potential and registered fixpoints.

It is now necessary to remind of the fact that conventional geodetic or terrestrial marking and localization systems are fundamentally based on the age-old philosophy that a point on the ground surface is defined both by a representation on a map, on which also some type of a fixpoint or fixed topography is represented, *and* by a specific location in the landscape relative the fixpoint or -points according to the map. The material marking system or "fixpoint plant" in the nature would be generally useless if it was not copied with high accuracy on associated maps. According to modern technique such maps may be represented by data screen pictures of high resolution, but the basic principle is still the same. All points, of course, may be accorded their specific coordinates, just as the fixpoints themselves, but the coordinates are not usable in the field for direct measurements; they are usable as a reference between the map and the field.

The invention denotes a radical break with these conventional principles. According to the invention the fixpoint plant in the nature consists at least mainly of subterranean markers which are located in specific lanes, in which the markers are located relatively close to each other, and these lanes are defined primarily by the exact physical location of the markers and secondarily by rough identification data indicative of 1) the approximate mutual localization of each pair of consecutive markers in the lane, and 2) the approximate absolute localization of the beginning of each lane. The latter, of course, may conveniently be identified on a map, though not necessarily with any high degree of accuracy, because the relevant subterranean marker of the beginning of the lane will be refindable in the field by means of the said search detector, when its location is only roughly indicated on a map, i.e. even with reference to topographic details which are not exactly real fixpoints, but are reasonably believed to be "correct" points anyhow, e.g. an old road or one side of an existing house.

Points to be registered in the fixpoint system of the invention are accorded such coordinates which refer to their location in a "local coordinate system" as defined by a nearby section of a marker lane, such section being identified e.g. by marker numbers of a lane having a geographically defined starting point. Thus, different geographical points may be registered in different coordinate systems, and at least so far no attempt is made to represent them in a common coordinate system as otherwise fundamental in traditional geodetic practice.

Normally there are two important purposes of having geographical points shown on a map, viz. partly for general orientation and partly for enabling an exact refining of the points or an exact plotting in of new points for making them, in turn, refindable. With the invention, however, the refinding and the plotting in does not primarily or even not at all involve the use of a map, though a rough map will still be convenient for orientation. The points are basically fixed by their respective coordinates in the respective local systems, and these coordinates constitute measuring data for direct use in the field. Thus, the coordinates are "digitalized" and highly suitable for practical use, because they refer to nearby real fixpoints. Once accorded its coordinates, a point will be easily refindable by simple measurements whether or not it is shown on any map.

The practical system or plant according to the invention generally comprises a high number of subterranean fixpoint markers placed row-wise in said lanes with such short distance between them that local measurements with the required high accuracy can be made conveniently with the use of simple equipment, e.g. ordinary measuring tape. A preferred distance between the markers in the lanes is some 100—200 meters in open field and some 50 m in city areas, where the markers are mounted under the streets. Each marker of the lane is accorded a number and an approximate measuring indication of its position relative the preceding marker, viz. its polar coordinates in the system as defined by the preceding marker point and the direction from that marker to the next preceding marker. Based on such indications it is very easy for the surveyor to rapidly follow the marker lane by consecutively measuring out, roughly, with simple instruments, the position of the next marker, finding the exact location of this next marker by means of the search device, and then continuing in this manner to the marker point adjacent the relevant working point or area. Having reached so far the surveyor can then change to more accurate, but still simple measuring means for effecting the required detailed measuring, now relative the adjacent fixpoint marker and its line of connection to the next fixpoint of the lane; the relevant "local coordinate system" is preferably defined as an orthogonal system having the said line of connection as one axis with the other axis constituted by the normal to the one axis in the rear fixpoint of the lane section between the two relevant markers.

A marker lane may be established whereever the need arises. Compared with usual geodetic practice one can say that a marker lane can substitute the triangulation path, corresponding to the surveyor mounting in each intermediate triangulation point (or most of them) a subterranean marker when he removes his pin from the point; then there will later on be no need to measure out the same points with high accuracy, because they are already fixed and marked in an easily refindable manner, without the markers affecting or being affected by normal surface activites, including ploughing. When a point is to be refound it will be found with high accuracy, and there will be no need to continue the measuring out of the marker lane for control purposes.

For facilitating the initial measuring out of a marker lane it is preferred to make use of the first marker and a known direction therefrom, whereby the next marker is easy to find based on its relevant polar coordinates. The approximate position of the first marker is derivable from a recorded description or a map, and so is the said known direction, if a reliable, visual fixpoint exists in the vicinity. Alternatively—and even preferably—the said direction is defined by two recorded markers, viz. the first marker and either the second marker (should it happen to be easily findable by description) or an additional marker as described together with the first marker so as to be as easy to find, e.g. described as being located under the same road side 10 meters further to the west. Upon detector localization of both of these markers their line of connection will be usable as a reference fixline for the polar measuring out of the approximate location of the next marker of the lane, all in a very simple manner.

It has been emphasized that geographic points are to be localized in different individual "local coordinate systems" and not in a common system. The points will be refindable nevertheless, and the system of the invention will be widely usble in practice already on this background. However, a superior and common geodetic system is almost bound to remain in existence and even be further developed with respect to accuracy, and there may be a natural desire of having the system or systems according to the invention coordinated with the superior system. This, however, is easy to achieve by measuring some selected local fixpoints into the superior system, whereafter the determination of the absolute coordinates of all points in the local coordinate systems will be a matter of calculation only. An easy manner of providing this coordination is to effect temporary visual marking of the selected fixpoints and produce an aerophotographical representation of the concerned region showing the selected fixpoints as well as some ordinary geodetic fixpoints.

The marker system of the invention, due to its lane character, is extremely well suited to form a simple and exact localization basis for subterranean pipelines and cables, such localization being an increasingly important necessity both in open land and in city areas. As mentioned, it is well known to provide for a direct and detectable underground marking of a cable or pipe by means of markers even of the same nature as the above mentioned preferred marker type, but such a kind of marking has not so far been related or relatable to a geodetic measuring system or arranged in such a system, the known pipe or cable markers merely constituting "underground flags" just for pointing out the location of the installation. Obviously, the marked points may well be mapped for easy refining, i.e. be determined by specific cartographic coordinates rather than effectively forming, themselves, the basic fixpoints of a consistent coordinate system. One important structural difference is that the markers in a system of the invention will generally be located fully clear or safely spaced from the object being "marked"; this is a clear advantage, because the fixpoint system will remain intact whenever work such as repair work is going on on the object. Another advantage is that the marker lane or lanes may be established prior to the installation of the object, whereby the planned position or track may be closely followed based on simple measurements from nearby fixpoints. These and the associated local coordinate systems may of course be used for the localization also of all other relevant objects in the vicinity.

Another important aspect of the invention is the use of marker lane systems in city areas, where it has traditionally been difficult or impossible to arrange for exact registration of the location of all the various cable and pipe installations under the streets. A localization system as here discussed is ideal for this purpose, because a marker lane may be established in each street with the fixpoint markers mounted underneath the street level at places where the said installations are not normally found or laid, primarily under the middle line of the street, whereafter all the cables and pipes may be registered in the same local coordinate system of the particular marker lane or marker lane section. The single "conductor owner", e.g. a telephone company or the water supply authority, may select to record its own location data only, while another "owner" or authority may wish to record all data for having a complete picture of the subterranean installations.

In the record each set of coordinates as representing a point of a specific installation may be completed with additional indications as to the type of the installation and the depth and possible special character of the point, e.g. whether the point is a joint or a valve.

When the markers are mounted according to specific positioning prescriptions referring to the street picture, e.g. under the middle of the street and under the middle point of all street crossings, then at least many of the markers will be easily refindable without any detailed topographic description other than e.g. the names of a street crossing. In city areas, therefore, it is less significant to speak of particular "beginnings" of the marker lanes, as it will normally be easy to immediately localize a lane section at least close to the relevant working area and thereafter localize the recorded lane section pertaining to the working area. Principally, therefore, all the discussed installations may be registered in a very detailed and refindable manner without the use of maps being required at all, when the markers are identified by numbers and street names.

Generally, as mentioned, the system of the invention requires two types of measurements to be made, viz. short range measurements for accurate determination of coordinates in the "local coordinate systems" and long range measurements (though not very long) for only approximate localization of the markers. In both cases relatively simple instruments will be usable, and especially the "inaccurate long range" instruments will be particularly associated with the main concept of the invention; further details will be given below.

For qualifying the subterranean markers as geodetic markers care should be taken that the markers are mounted with precise vertical orientation, and the invention comprises various auxiliaries even for the mounting of the markers and for the practical and easy use of the marker lanes.

In accordance with the foreging the invention is characterized by the features as defined in the appended claims.

Even in the fixpoint system as disclosed in said EP—A—00 90 021 the markers may happen to be mounted lane- or chainwise, but they do not form part of a system which defines, itself a row of local coordinate systems. The markers are intended to be used as individual fixpoints and to be individually locatable based on the use of a map, just as conventional fixpoints, while with the present infention at least the majority of the markers will require no map representation, since they will be findable in a successive manner through the lane based on a digitalized marker register belonging to the particular lane. For arriving at a marker to be used the operator may have to find his or her way past a number of markers, but the passage will be easy because the intermediate markers will not have to be localized very accurately; a rough indication by the search detector telling that the marker is somewhere in the near vicinity, e.g. just less than one meter from the search device, will be sufficient for establishing a new base for the measuring out to the following marker or marker area, while an accurate determination of a marked fixpoint will be required only at the site where needed.

In the following the invention is described in more detail with reference to the drawings, in which:

Fig. 1 is a sectional view of a ground area provided with subterranean markers;

Fig. 2 is a schematic map representation of the tracks of a cable and a marker lane, respectively;

Fig. 3 is an example of a coordinate register;

Fig. 4 is a street map illustrating the marker fixpoints; and

Fig. 5 is a cross sectional view of a street.

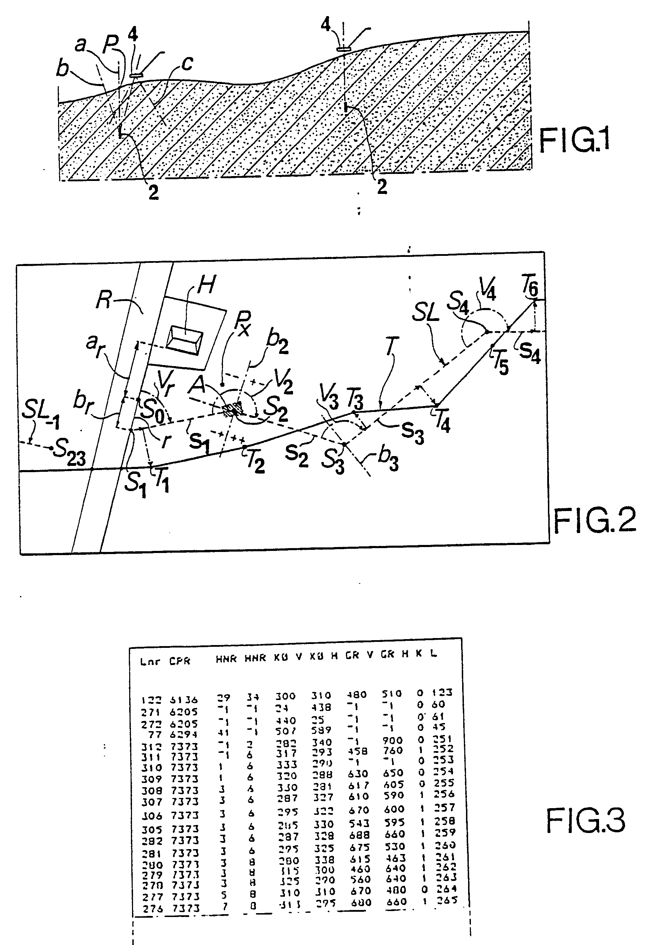

In Fig. 1 is shown a section through a ground area in which subterranean markers 2 are mounted, these markers being of a type—e.g. as according to said earlier patent application—which is accurately localizable by means of a searching detector 4 as moved over the area. In the left side of the figure is shown that the marker reveals itself by a vertical axis $a$ inside a space angle $b$, inside which the detector can respond to the presence of the marker. The detector 4 itself may have a field of sensitivity shown by a space angle $c$, while it is generally designed so as to be able to suitably indicate its position accurately in the central field axis $a$. In practice it is hereby possible to trace a marker 2 within a few square meters about the axis $a$ and thereafter by a detailed search localize the marker or rather its axis quite accurately. The point of intersection between the axis $a$ and the ground surface is designated P, this being the relevant fixpoint, which will have a size of only few square cemtimeter.

With the known application of markers 2 for the direct marking of subterranean objects a correspondingly accurate marking will normally be useless, because only a working area should be indicated, in which access will be had to the object by a digging work with usual coarse implements. On the other hand, in connection with the invention, care should be taken that each marker is mounted with an accurate vertical orientation in the ground, as a possible later change of the thickness of the ground above the marker could otherwise cause the fixpoint P to be perceptibly displaced. The invention, therefore, comprises an auxiliary device for accurate marker mounting, see below.

In open field the markers will be mountable almost anywhere, as they will not normally—e.g. by mounting at a depth of ½—2 m—be affected by usual surface works. According to the said earlier patent application the markers may hereby generally be mounted for the marking of geodetic fixpoints, but according to the present invention they are arranged in a special marking plant, in which they are laid out in specific tracks or lanes, named "sonde lanes", which are arranged generally horizontally spaced from the objects or lines such as conductor tracks, the positions of which are to be registered by means of the marker plant and an associated registration system.

A part of such a marker plant is shown in Fig. 2. The plant consists of a plurality of markers 2 (Fig. 1), here designated S with an index referring to the number of the single marker in the "marker lane" or "sonde lane" as defined by the markers; this lane is shown by a dotted line SL, which is sectionwise straight between the consecutive markers or "sondes" of the lane. The marker lane SL generally stretches along a track T, which represents the material track of a conductor such as gas pipe, a heat transmission pipe or a power or tele cable.

The marker lane SL begins at a marker $S_1$, which on the map is shown located at the side edge of a road R and at an indicated distance of $a_r + b_r$ from a house H, this distance having been measured reasonably accurately when the marker $S_1$ was mounted. Based on a registered indication of this distance from the house H along the road R it is possible on the location to localize the marker $S_1$ or rather its associated fixpoint P by means of a searching detector 4 (Fig. 1) in an easy and rapid manner.

The next point $S_2$ ($P_s$) in the marker lane is defined, in the associated register, by a direction and a distance from the point $S_1$ ($P_1$), these measuring data having been entered into the register by the mounting of the markers. Various already existing auxiliaries will be usable for the measuring out of the distance to the next point $P_2$ ($S_2$), but as far as the direction is concerned the problem is worse, when simple auxiliaries are wanted, because the conventional direction finders are based on a difficult determination of the true north direction.

This difficulty is overcome by using as a basis or start of the marker lane SL not only a start marker $S_1$, but additionally a reference marker $S_0$ mounted in the vicinity of the marker $S_1$ in a position which is easily describable in the said register, e.g. at the same side of the road R and at a specific distance $a_r$ from the house H. By localization and temporary visual marking of the two markers $S_0$ and $S_1$ a reference line r will be defined, as a base line for the measuring out of the direction to the next marker, i.e. the next fixpoint $S_2$ is determined based on the recorded distance measure of the connection line $s_1$ between $S_1$ and $S_2$ and the recorded angle $V_r$ between the lines r and $s_1$. These measuring data need not be particularly accurate, as they should enable only a rough localization of the marker $S_2$, e.g. inside the hatched area A as shown; on the location the marker $S_2$ is easy to localize accurately anyway, viz. with the use of the searching detector.

Thereafter the following fixpoint or marker $S_3$ is localized based on the recorded distance $s_2$ from the point $S_2$ and angle $V_2$ between the lines $s_1$ and $s_2$, and so forth along the marker lane SL until the fixpoint or fixpoint area as forming the goal of the lane tracking work is reached, e.g. at an area in which new coordinates are to be measured and read into the register or in which an already registered object such as a joint of a cable along the track T is to be localized.

It will be appreciated that each fixpoint in the marker lane SL can be localized highly accurately despite a relatively low accuracy of the measuring out from point to point. By the measuring out no accummulated inaccuracy will occur, because the inaccuracy is stepwise eliminated on an empirical basis.

While the marker plant itself is thus localizable without particularly accurate measurement records and instruments, the coordinate measurements in the plant system may nevertheless be effected with high and absolute accuracy, because the fixpoints are defined by the real physical location of the markers.

In a preferred coordinate measuring arrangement each marker lane section $s_n$ is used as an axis of an orthogonal local coordinate system, the other axis of which is constituted by the normal to the line $s_n$ in the point, $S_n$, from which the lane section $s_n$ proceeds towards the next point $S_{n+1}$, an outbound orientation of the marker lane thus being chosen. For the lane section $s_2$ this normal or base axis is designated $b_2$, and it is illustrated that the four quadrants of the system $b_2$, $s_2$ are provided with signs $++$, $+-$, $-+$ and $--$, whereby a set of coordinates as measured along the axes $b_2$ and $s_2$ will be unique when accorded the relevant sign. A given point $P_x$ near the fixpoint $S_2$ may thus, as desired, be registered in the $b_2 s_2$-system or in a corresponding $b_1 s_1$-system.

On the track T are shown some selected points, $T_1$, $T_2$, etc., preferably knee points of the track, which are registered in the various relevant local coordinate systems $b_n s_n$. These points, when accurately registered in the relevant local systems, will be refindable with the same good accuracy when measured out from the system axes $b_n$ and $s_n$, despite the fact that the recorded coordinates themselves do not define any absolute location of the points, because the associated fixpoints are recorded with an accuracy which is not at all as high as the standard for geodetic measurements. As mentioned, however, selected local coordinate systems are easy to relate to a superior absolute measuring system by measuring into the latter the fixpoints of the former, e.g. through air photography. It may even be chosen to measure out the marker lane with high accuracy, once and for all, whereby it will of course be particularly easy to provide for coordination with an absolute measuring system.

It may of course be convenient to make use of a map, e.g. corresponding to Fig. 2, but often it will be quite unnecessary, when the beginning ($S_0$, $S_1$) of the marker lane is recorded by description or marking with sufficient accuracy to enable an on-the-spot localization of the markers $S_0$ and $S_1$ by means of the searching detector, whereafter the further measuring out may be based solely on the recorded measures. However, a coarse map marking of the tracks SL and T will be advantageous for orientation, e.g. for quick localization of the relevant marker lane or the relevant marker area in an actual geographical area, from which, by way of example, is received a notice of fault on the installation in the track T.

The individual marker lanes SL should of course not be too long, though they may well stretch in continuation of each other. Thus it will be important that along long track T there is arranged, at suitable intervals, well defined "lane beginnings", preferably defined by a reference marker $S_0$ for determination of the reference line r for enabling outbound measuring from the associated start marker $S_1$. To the left in Fig. 2 it is shown that a preceding marker lane along the track T is terminated by a marker designated $S_{23}$, but besides, the reference line r and the marker $S_1$ could well be used to define a beginning of also the marker lane to the left of the described lane SL. The optimal length of the single marker lanes will depend of many factors, which should not here be discussed in more detail; it should be mentioned, however, that the shape of the terrain may necessitate the markers to be placed relatively close to each other, and though the markers can be successively refound rather quickly, it may thus be convenient to establish—when possible—the "marker lane beginnings ($S_0$, $S_1$)" closer to each other than necessary where the markers are mountable with increased mutual distance, such that the number of markers in each marker lane is kept reasonably low.

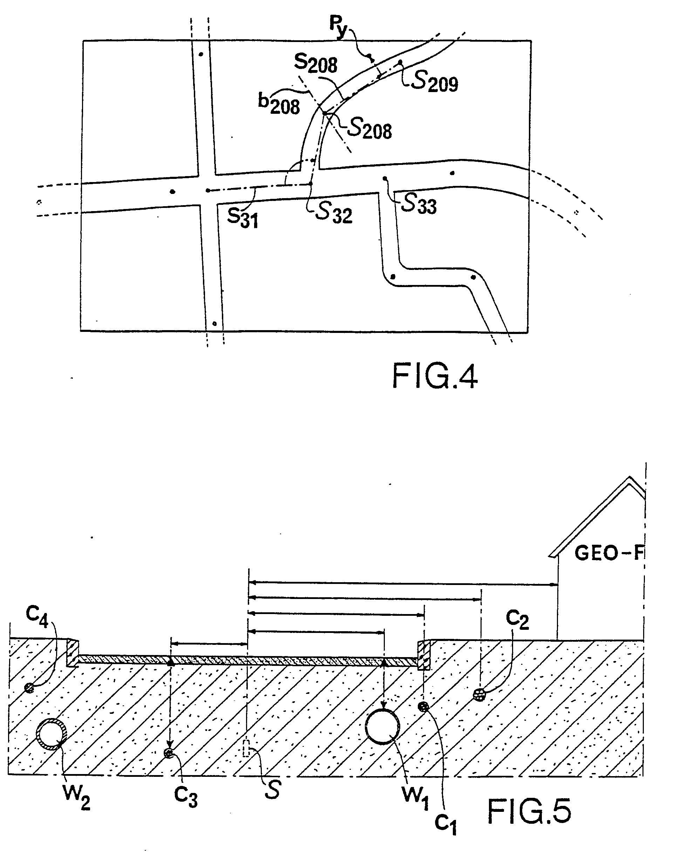

In Fig. 3 is shown a fraction of a data list or a data screen picture indicating in the left column the numbers of the markers or "sondes" S along a specific marker lane with associated measuring data for the localization of the next marker in the lane, while under the single marker numbers are listed the coordinates of points as registered along the particular lane section onwards to the following marker, i.e. in the particular "local coordinate system"; for each set of coordinates may be listed an indication of the type and the depth of the respective point, i.e. the kind of the registered object and the mounting depth thereof on the particular place. As mentioned, the measuring data for the localization of the next marker may be rather non-accurate, e.g. specified in whole meters and degrees, while the registered coordinates may be as accurate as desired, e.g. in whole centimeters.

The marker plant illustrated by Fig. 2 is established particularly for localization registration of the specific track T, e.g. a pipeline for natural gas, but it will be appreciated that the same marker plant ("sonde lane") will be usable for the registration of all possible other objects in the vicinity of the marker lane.

The latter aspect is essential, when marker plants in city areas are considered, as in the following with reference to Figs. 4 and 4.

In city areas it is usual that the various cable and pipe installations are located along the streets, viz. along and under the side edges of the streets, while they are normally absent underneath the middle of the streets. For the invention it is a special purpose to enable an exact registration of such installations in a simple manner, and it is hereby very advantageous to establish the marker lanes along the middle lines of the streets; here there will be free space for both the mounting and the refinding of the markers, and the markers will normally be entirely free of the installations underneath the street.

In Fig. 4 is shown a street map, in which is marked the registration plant as constituted by the various markers. The marker lanes are established by the mounting of markers according to the following preferred principles:

1) In straight streets without side streets markers are mounted with a mutual distance of approximately 50 m or slightly less, viz. corresponding to the length of ordinary field measuring tapes.

2) In streets with curves or knees the markers are mounted in such points that there will be free sight between consecutive fixpoints in the marker lane.

3) In front of side streets a marker is mounted in the through-going street, whereby this marker may be included in the marker lane of the main street and additionally be a start marker of the marker lane of the side street.

4) At the beginning of individual marker lanes reference markers ($S_0$) are mounted when necessary, i.e. when there are no other safe reference points for the measuring out of the direction to marker number two in the marker lane; however, this marker number two will often be so easily refindable that the beginning of the marker lane may be defined or determined solely by the markers $S_1$ and $S_2$, whereby the reference line r (Fig. 2) will coincide with the line $s_1$.

Fig. 4 illustrates various marker positions according to these principles, which is believed to require no further explanation. It is shown as a single example that a point $P_y$ is registered in a marker lane initiated by a marker number $S_{32}$ in a main street, the preceding marker lane section $s_{31}$ of which is used as a reference line for the determination of the angular direction to the next marker, $S_{208}$, in the respective side street marker lane. The point $P_y$ is registered in the local coordinate system $bs_{208}$.

In Fig. 5 is shown that in such a local coordinate system in a street may be registered many different objects or tracks in the form of cables c or pipes w, i.e. all the "conductor owners" may have their respective systems registered by means of one single marker plant. By suitable coordination it is likewise possible to achieve a collective registration of all installations in the street, and of course objects even above the ground as well as surface points may be registered as well.

The specific manner in which the various data concerning the beginning and the location of the marker lanes and the types and coordinates of the registered objects are recorded in the associated record system, e.g. according to Fig. 3, is not essential for the invention, as there will of course be many possibilities in this respect. Principally, however, the record systems will be comprised by the invention, because they will be closely related to the marker plant and be meaningless without it.

A marker lane will be defined by its fixpoints, which are again determined by markers, which are adapted or tuned according to the relevant searching detectors (4, Fig. 1) in such a manner that the markers are localizable solely by these detectors, which on their side cannot react on objects other than such markers. Nothing prevents, therefore, that several, mutually independent marker plants, e.g. based on different search frequencies, may be used together, whereby such plants may show arbitrary overlappings, as in use they will be non-existent to each other. If desired, even secret marker plants may be established, e.g. for military use, operating on a secret or "protected" searching frequency or signal type in general.

As disclosed in the said earlier patent application different frequencies may be used even in the manner that standard markers are generally used for enabling the localization therof, while in connection with the single markers one or more further markers may be provided for selectively indicating some specific character or quality of the single fixpoint. It should be emphasized here that the standard marker as comprising a relatively long ferrite core is well suited to produce a response signal which is detectable over a considerable surface area as well as suitable for exact localization of the marker, while additional identification markers will not need to produce a correspondingly strong signal, because they shall be readable only when the detector has already been moved into its centered position over the marker. For this reason the additional markers may be still smaller and cheaper units, and it should be mentioned that the possibility and advantages of using such additional markers is not confined to the plant according to the invention, as they will be advantageous even in the known arrangements with direct object marking, whereby they can further identify the marked object. In this connection it is worth mentioning that the invention is combinable with the said known arrangements, as in some situations it could be of interest to mark a registered coordinate point of an object by means of a local subterranean marker; in that case even the coordinates of the point in the local coordinate system of the relevant marker lane section could be measured and recorded with a low degree of accuracy, since the point would be well defined anyway as traceable with a search detector.

Some preferred measures

The distance between the marker lane start marker $S_1$, and the associated reference marker $S_0$ (Fig. 2) should be some 4—25 meters, preferably 10 meters as a standard.

The distance between the markers of a marker lane ($S_1$, $S_2$ etc.) should not normally exceed 200—300 meters in open land with free sight, about 100 meters being a convenient standard. In city areas a practical maximum distance will be some 40—75 m, preferably according to the standard length of field measuring tapes.

When possible, the single marker lanes should not include more than some 20—30 markers, and reference markers $S_0$ should be mounted near a start lane marker $S_1$ principally wherever reasonably possible, e.g. adjacent all crossings between a chain of markers and road crossing this chain.

according to the nature of the marker lanes or chains it will be obvious that the angle between two adjacent lane sections s will normally be within 100°—300° in the 400°-system, though exceptions may occur. However, already this measure will indicate a fundamental difference from the conventional triangulation practice.

As mentioned, it is important that the markers of a marker lane or chain are generally horizontally spaced from the registered objects, whenever possible, and as a rule this spacing should be at least 50 cm. It is also to be observed that the markers should preferably be spaced not only from the registered objects, but even from non-registered subterranean objects of a type liable to require attention or exposure at any time, as the markers could then be unintentionally removed or damaged. Especially in the city areas this condition cannot alway be fulfilled for all markers, e.g. if the markers are preferred to be mounted closely along the facade row of the houses, but the said spacing condition should nevertheless be observed as a general and important rule. Should a few markers happen to disappear or get displaced it will of course be possible to re-establish them, e.g. based on already registered co-ordinates, i.e. the system or plant according to the invention will not be extremely sensitive to such events.

As a final remark it should be mentioned that the single local co-ordinate points may be accorded information not only with respect to the location and type and depth of the registered object, but also with respect to the absolute length of the object, e.g. a cable or pipe, from the preceding fixpoint of from a specific starting point of the particular cable or pipe. i.e. an indication of the so-called pipe or cable abscissa, which may well deviate from the previously discussed types of distance between the consecutive fixpoints.

**Claims**

1. A terrestrial localization system comprising a plurality of marked fixpoints, in which system all or substantially all of the fixpoints are defined by subterranean markers of a type locatable with high accuracy by means of movable detectors, the said markers being arranged successively in a row, that is chainwise to form a single marker lane, said system also comprising a physical recording register, the position of each marker after the beginning of the marker lane being recorded in said register by co-ordinates of relatively low accuracy measured relative to immediately preceding markers in the lane, and wherein discrete locations of subterranean objects are recorded by co-ordinates measured relative to nearby fixpoints of the marker lane, said system even including not only the physical recording register but also the said movable detectors.

2. A localization system according to claim 1, in which the beginning of each marker lane is established by a start marker and a reference marker, which is spaced from said start marker so as to define therewith a connection line which forms a basis for the measuring out of the direction of the next succeeding marker in the marker lane.

3. A localization system according to claim 1 or 2, in which the location of each marker in the marker lane is recorded as its distance from the preceding marker and the direction therefrom relative to the line of connection between the preceding and the next preceding marker in the lane.

4. A localization system according to claim 1, 2 or 3 in which the majority of the markers in a city area are mounted underneath the streets.

5. A localization system according to claim 4, characterized in that the markers are located directly beneath the middle lines of the streets.

6. A localization system according to any preceding claim in which at least a majority of the markers are horizontally spaced at least 50 cm from the registered objects and also substantially spaced from other subterranean objects of types potentially requiring attendance.

7. A method of establishing a terrestrial localization system as claimed in claim 1, in which fixpoints are marked in the terrain and the localizations of the fixpoints are recorded in a physical fixpoint register for identification of each fixpoint and for enabling locations of subterranean objects to be entered into the localization system based on an associated physical recording of the location of the objects relative to nearby fixpoints, wherein the physical marking of at least the majority of the fixpoints is effected by mounting in the ground subterranean markers which are accurately locatable on the ground surface with the use of a suitable, movable search device as moved over a coarsely register defined area about the relevant fixpoint, and in that the markers are arranged or mounted in a continuous row, i.e. marker lane, in which the single fixpoints are identified in the associated fixpoint register by only coarsely identified position data referring e.g. to topographic features such as street crossing or to a coarsely determined distance from the foregoing fixpoint in the row of fix points and a coarsely recorded direction from such a previous point relative to the direction between the two foregoing markers of said row or "lane".

8. A method of recording the position of objects in a terrestrial localization system as claimed in claim 1, in which the positions of subterranean objects are each measured with reference to at least one said fixpoint and recorded in an associated object register, wherein the measuring is based on co-ordinates in a co-ordinate system defined by two fixpoints, which are located relatively closely to each other in a marker lane, the co-ordinates used being in the form of polar or rectangular co-ordinates in the said co-ordinate system as defined by two adjacent fixpoints, these co-ordinates being recorded in a digital form in the object register.

**Patentansprüche**

1. Landvermessungs-System, das eine Vielzahl von markierten Festpunkten einschließt, und in dem alle oder nahezu alle Festpunkte durch unterirdische Markierungen eines Typs definiert sind, der mit hoher Genauigkeit mittels bewegbarer Detektoren auffindbar ist, wobei die genannten Markierungen aufeinanderfolgend in einer Reihe, d.h. kettenweise angeordnet sind, um eine einzelne Markierungsbahn zu bilden, wobei das System ferner ein physikalisches Aufzeichnungsregister enthält, in dem die Position jeder Markierung nach dem Beginn der Markierungsbahn durch Koordinaten mit relativ geringer Genauigkeit aufgezeichnet werden, die relativ zu unmittelbar vorhergehenden Markierungen in der Bahn gemessen werden, und wobei diskrete Orte von unterirdischen Objekten durch Koordinaten aufgezeichnet werden, die relativ zu nahegelegenen Festpunkten der Markierungsbahn gemessen werden, wobei das System sogar nicht nur das physikalische Aufzeichnungsregister, sonderen auch die beweglichen Detektoren einschließt.

2. Vermessungssystem nach Anspruch 1, bei dem der Beginn jeder Markierungsbahn durch eine Anfangsmarkierung und eine Bezugsmarkierung errichtet wird, die von der Anfangsmarkierung einen derartigen Abstand aufweist, daß damit eine Verbindungslinie definiert wird, die eine Grundlage für die Ausmessung der Richtung der nächstfolgenden Markierung in der Markierungsbahn bildet.

3. Vermessungssystem nach Anspruch 1 oder 2, bei dem die Lage jeder Markierung in der Markierungsbahn aufgezeichnet wird als ihre Entfernung von der vorhergehenden Markierung und die Richtung davon relativ zur Verbindungslinie zwischen der vorhergehenden und der nächstvorhergehenden Markierung in der Bahn.

4. Vermessungssystem nach Anspruch 1, 2 oder 3, in welchem die Mehrheit der Markierungen in einem Stadtgebiet unterhalb der Straßen angebracht ist.

5. Vermessungssystem nach Anspruch 4, dadurch gekennzeichnet, daß die Markierungen unmittelbar unterhalb der Mittellinien der Straßen angeordnet sind.

6. Vermessungssystem nach einem der vorhergehenden Ansprüche, bei dem wenigstens eine Mehrseit der Markierungen einen horizontalen Abstand von wenigstens 50 cm von den registrierten Objekten und ferner einen nennenswerten Abstand von anderen Objekten von Typen hat, die potentiell eine Wartung erfordern.

7. Verfahren zur Errichtung eines Landvermessungs-Systems nach Anspruch 1, bei dem Festpunkte in dem Gelände markiert und die Lokalisierungen der Festpunkte in einem physikalischen Festpunktregister aufgezeichnet werden, um jeden Festpunkt zu identifizieren und die Eingabe von Orten von unterirdischen Objekten in das Vermessungssystem auf der Basis einer zugeordneten physikalischen Aufzeichnung der Ortes der Objekte relativ zu nahegelegenen Festpunkten zu ermöglichen, wobei die physikalische Markierung von wenigstens der Mehrheit der Festpunkte dadurch bewirkt wird, daß im Boden unterirdische Markierungen angebracht werden, die auf der Erdoberfläche unter Verwendung einer geeigneten bewegbaren Suchvorrichtung genau lokalisierbar sind, wenn diese über einen grob in einem Register definierten Bereich um den relevanten Festpunkt bewegt wird, und wobei die Markierungen in einer kontinuierlichen Reihe, d.h. einer Markierungsbahn, angeordnet oder gelagert sind, in der die einzelnen Festpunkte in dem zugeordneten Festpunkregister durch nur grob identifizierte Positionsdaten identifiziert werden, die sich z.B. auf topografische Merkmale wie eine Straßenkreuzung beziehen oder auf eine grob bestimmte Entfernung von dem vorangehenden Festpunkt in der Reihe von Festpunkten und eine grob aufgezeichnete Richtung von solch einem vorangehenden Punkt relativ zur Richtung zwischen den beiden vorhergehenden Markierungen der Reihe oder "Bahn".

8. Verfahren zur Aufzeichnung der Position von Objekten in einem Landvermessungs-System nach Anspruch 1, bei dem die Positionen von unterirdischen Objekten jeweils in bezug auf wenigstens einen Festpunkt gemessen und in einem zugeordneten Objektregister aufgezeichnet werden, wobei die Messung auf Koordinaten in einem durch zwei Festpunkte definierten Koordinatensystem beruht, die sich relative nahe beieinander in einer Markierungsbahn befinden, wobei die verwendeten Koordinaten die Form von Polar- oder Rechteck-Koordinaten in dem von zwei benachbarten Festpunkten definierten Koordinatensystem haben, und diese Koordinaten in dem Objektregister in digitaler Form aufgezeichnet werden.

## Revendications

1. Système de localisation terrestre comprenant plusieurs points fixes marqués, système dans lequel la totalité ou la quasi-totalité des points fixes sont définis par des repères souterrains d'un type pouvant être situé avec une haute précision à l'aide de détecteurs mobiles, lesdits repères étant disposés successivement en un rangée, c'est-à-dire à la manière d'une chaîne pour former une seule voie de repères, ledit système comprenant également un registre d'enregistrement physique, la position de chaque repère, après le début de la voie des repères, étant enregistrée dans ledit registre par des coordonnées de précision relativement faible, mesurées par rapport aux repères immédiatement précédents dans la voie, et dans lequel des emplacements distincts ("discrets") d'objets souterrains sont enregistrés d'après des coordonnées mesurées relativement à des points fixes voisins de la voie des repères, ledit système comprenant également non seulement le registre pour enregistrement physique mais aussi lesdits détecteurs mobiles.

2. Système de localisation selon la revendication 1, dans lequel le début de chaque voie des repères est établi par un repère de départ et un repère de référence, qui est espacé dudit repère de départ de façon à définir avec lui une ligne de connexion formant une base pour la mesure de la direction du repère immédiatement suivant dans la voie des repères.

3. Système de localisation selon la revendication 1 ou 2, dans lequel l'emplacement de chaque repère dans la voie des repères est enregistré sous forme de es distance par rapport au repère précédent et par sa direction, à partir du repère précédent, par rapport à la ligne de connexion entre le repère précédent et le repère immédiatement suivant faisant partie de la voie des repères.

4. Système de localisation selon la revendication 1, 2 ou 3, dans lequel la majorité des repères sont, dans une zone urbaine, disposés au-dessous des rues.

5. Système de localisation selon la revendication 4, caractérisé en ce que les repères sont placés directement au-dessous des axes médians des rues.

6. Système de localisation selon l'une quelconque des revendications précédentes, dans lequel au moins la majeure partie des repères sont espacés horizontalement d'au moins 50 cm des objets enregistrés et sont aussi nettement espacés d'autres objets souterrains dont les types peuvent éventuellement exiger de l'entretien.

7. Procédé pour établir un système de localisation terrestre, tel que revendiqué à la revendication 1, dans lequel les points fixes sont marqués dans le terrain et les localisations des points fixes sont enregistrées dans un registre de points fixes physiques pour identification de chaque point fixe et pour permettre de localiser des objets souterrains à faire entrer dans le système de localisation à base d'un enregistrement physique associé de l'emplacement des objets par rapport à des points fixes voisins, procédé dans lequel le marquage physique d'au moins la majeure partie des points fixes est effectué par le montage, dans le sol, de repères souterrains que l'on peut situer avec précision à la surface du sol en utilisant un dispositif convenable et mobile de recherche que l'on déplace au-dessus d'une zone grossièrement définie dans le registre autour du point fixe approprié, et en ce que les repères sont disposés ou montés en une voie continue, c'est-à-dire une voie de repères, procédé dans lequel les divers points fixes individuels sont identifiés, dans le registre des points fixes associés, par des données de position, identifiées de façon grossière seulement, en se référant par exemple à des caractéristiques topographiques telles qu'une intersection de rues ou à une distance grossièrement déterminée à partir du point fixe précédent de la rangée ou voie de points fixes et par une direction, enregistrée en gros, à partir d'un tel point fixe précédent par rapport à la direction reliant les deux repères précédents de ladite rangée ou "voie".

8. Procédé pour enregistrer la position d'objets dans un système de localisation terrestre, tel que revendiqué à la revendication 1, dans lequel les positions des objets souterrains sont mesurées chacune en se référant à au moins l'un desdits points fixes et qui est enregistrée dans un registre des objects associées, procédé dans lequel la mesure se fonde sur des coordonnées, dans un système de coordonnées défini par deux points fixes, qui sont situés relativement près l'un de l'autre dans une voie de repères, les coordonnées utilisées étant sous forme de coordonnées polaires ou rectangulaires dans ledit système de coordonnées, tel que céfini par deux points fixes adjacents, ces coordonnées étant enregistrées sous forme numérique dans le registre des objes.

**FIG.1**

**FIG.2**

| Lnr | CPR | HNR | HNR | XB V | XB H | GR V | GR H | K | L |
|---|---|---|---|---|---|---|---|---|---|
| 122 | 6136 | 29 | 34 | 300 | 310 | 480 | 510 | 0 | 123 |
| 271 | 6205 | -1 | -1 | 24 | 438 | -1 | -1 | 0 | 60 |
| 272 | 6205 | -1 | -1 | 440 | 25 | -1 | -1 | 0 | 61 |
| 77 | 6294 | 41 | -1 | 507 | 589 | -1 | 900 | 0 | 45 |
| 312 | 7373 | -1 | 2 | 282 | 340 | -1 | 900 | 0 | 251 |
| 311 | 7373 | -1 | 6 | 317 | 293 | 458 | 760 | 1 | 252 |
| 310 | 7373 | 1 | 6 | 333 | 290 | -1 | -1 | 0 | 253 |
| 309 | 7373 | 1 | 6 | 320 | 288 | 630 | 650 | 0 | 254 |
| 308 | 7373 | 3 | 6 | 330 | 281 | 617 | 605 | 0 | 255 |
| 307 | 7373 | 3 | 6 | 287 | 327 | 610 | 590 | 1 | 256 |
| 306 | 7373 | 3 | 6 | 295 | 322 | 670 | 600 | 1 | 257 |
| 305 | 7373 | 3 | 6 | 285 | 330 | 543 | 595 | 1 | 258 |
| 282 | 7373 | 3 | 6 | 287 | 328 | 688 | 660 | 1 | 259 |
| 281 | 7373 | 3 | 6 | 295 | 325 | 675 | 530 | 1 | 260 |
| 280 | 7373 | 3 | 8 | 280 | 338 | 615 | 463 | 1 | 261 |
| 279 | 7373 | 3 | 8 | 315 | 300 | 460 | 640 | 1 | 262 |
| 278 | 7373 | 3 | 8 | 325 | 290 | 560 | 640 | 1 | 263 |
| 277 | 7373 | 5 | 8 | 310 | 310 | 670 | 480 | 0 | 264 |
| 276 | 7373 | 7 | 8 | 313 | 295 | 680 | 660 | 1 | 265 |

**FIG.3**

1

FIG.4

FIG.5